Europäisches Patentamt

(19) European Patent Office

Office européen des brevets

(11) **EP 0 944 846 B1**

(12) **EUROPEAN PATENT SPECIFICATION**

(45) Date of publication and mention
of the grant of the patent:
**20.02.2002 Bulletin 2002/08**

(51) Int Cl.[7]: **G01V 1/145**, G01M 7/08

(21) Application number: **97912095.3**

(86) International application number:
**PCT/EP97/05417**

(22) Date of filing: **26.09.1997**

(87) International publication number:
**WO 98/26311 (18.06.1998 Gazette 1998/24)**

(54) **SEISMIC WAVE SIMULATION APPARATUS**

VORRICHTUNG ZUR SIMULIERUNG EINER SEISMISCHEN WELLE

APPAREIL DE SIMULATION D'ONDES SEISMIQUES

(84) Designated Contracting States:
**AT BE CH DE DK ES FI FR GB GR IE IT LI LU MC NL PT SE**

(30) Priority: **12.12.1996 EP 96309084**

(43) Date of publication of application:
**29.09.1999 Bulletin 1999/39**

(73) Proprietor: **EUROPEAN COMMUNITY
2920 Luxembourg (LU)**

(72) Inventors:
• **ALBERTINI, Carlo
I-21027 Ispra(VA) (IT)**
• **LABIBES, Kamel
I-21021 Angera(VA) (IT)**

(74) Representative: **Croft, Michael John et al
Wilson Gunn Skerrett, Charles House, 148/9
Great Charles Street
Birmingham B3 3HT (GB)**

(56) References cited:
EP-A- 0 007 740          EP-A- 0 410 370
WO-A-81/00459           FR-A- 2 229 967
GB-A- 2 211 611

• DI PRISO M ET AL: "PVDF PIEZOELECTRIC SENSORS AND RELATED ELECTRONICS STRUCTURAL ENGINEERING APPLICATIONS" PROCEEDINGS OF THE INSTRUMENTATION AND MEASUREMENT TECHNOLOGY CONFERENCE, ORVINE, CA., MAY 18 - 20, 1993, no. -, 18 May 1993, INSTITUTE OF ELECTRICAL AND ELECTRONICS ENGINEERS, pages 228-231, XP000400175
• PATENT ABSTRACTS OF JAPAN vol. 097, no. 006, 30 June 1997 & JP 09 043093 A (ONO SOKKI CO LTD), 14 February 1997,

## Description

This invention relates to seismic wave simulation apparatus more particularly but not exclusively for simulating earthquake phenomena occurring in soil and in a foundation embedded in the soil, which foundation may be for example, part of a building.

Conventionally, simulation of a seismic wave or earthquake in a structure or building is done by means of a pseudo-dynamic test (reaction wall) or by the "shaking" table. In order to simulate seismic waves or earthquakes occurring in soil, explosives are used which tend to be inconvenient since the explosives do not generate waves of known energy content and shape and duration having characteristics of earthquakes. Thus, using such methods to simulate seismic waves or earthquakes does not allow wave propagation laws and effects to be properly established through seismic wave simulation in soil or other structures.

EP-A-7740 discloses an apparatus for performing dynamic tests on large structures which comprises an energy accumulator in the form of a loading cable for applying a force to a test piece, a hydraulic jack for tensioning the cable, a structure for anchoring the cable, a stopping and releasing device operable to secure the cable before a test and, after tensioning of the cable, to release the cable so that it propagates a wave to the test piece, a recoil shock-absorber and a device for limiting lateral oscillations of the cable.

This apparatus is, however, not suitable for simulating seismic waves because the cable is only capable of generating a tension wave of constant amplitude which is not representative of a seismic wave because seismic waves have complex wave forms with a changing amplitude.

It is an object of the present invention to provide an apparatus which is capable of simulating complex seismic waves.

According to the present invention there is provided a seismic wave simulation apparatus for generating a simulated seismic wave in a geological specimen, which comprises an elastic energy accumulator comprising a member arranged, in use, to act on the geological test specimen and supported to resist movement in a direction away from the specimen when the elastic energy accumulator is preloaded in said direction by actuator means, the arrangement being such that, in use, the preload force can be quelled suddenly, for example by triggering an explosive bolt, so that the member is released into impact or energy transfer with the geological specimen thereby transmitting a seismic wave to the geological specimen, characterised in that the elastic energy accumulator member has a number of sections of different diameters.

By providing the energy accumulator member with sections of different diameters the member is so shaped as to simulate a seismic wave of known characteristics in order that wave propagation laws and effects can be properly established.

Preferably the elastic energy accumulator member has a number of co-axial cylindrical sections of different diameters of which the section at the end of the member remote from the actuator means constitutes an impactor which, in use, is held adjacent the geological specimen under test so as to impact the specimen on release of the member.

In one embodiment of the present invention, the elastic energy accumulator includes seven cylindrical sections of different diameter. Preferably, one of those sections nearest the actuator means has the smallest diameter of the sections and, where an explosive bolt is provided as aforementioned, to release the impact energy said explosive bolt is, preferably, provided in this section and preferably is disposed diametrically of said section. Said smallest diameter section may adjoin a large diameter section which is connected to two further sections stepped down in diameter and connected in turn to a smaller diameter section which is larger than said smallest section adjacent the actuator means. This smaller diameter section may be connected to two larger sections which are stepped up in diameter, the last of these sections constituting the impactor to be located adjacent to the geological specimen in use. The length of the elastic energy accumulator (comprised of said seven sections) and the actuator means may be in the order of 500 metres.

The accumulator member may be supported to resist movement in a direction away from the geological specimen under test by said last-mentioned section. A blocking system or fixed support may be provided at the rear of said last-mentioned section surrounding the penultimate section, thereby resisting or preventing movement of the accumulator member in said direction on the application of the preload force.

Usually, the apparatus will include transducers arranged to measure, in use, the mechanical behaviour across the section of the geological specimen through which a seismic wave is being transmitted.

Preferably, the transducers are in the form of bars or elongate members arranged in a direction parallel to the direction of propagation of the seismic wave. Seismic sensors may also be included extending at an angle or transversely of the direction of propagation of the wave.

Preferably, in order to obtain measurements regarding local displacements of the soil in the geological specimen, said apparatus may include a thin metallic or conductive sheet to be fixed to the surface of the geological specimen (for example by cement) and connected to measuring instrumentation such as a Wheatstone bridge, for example, in order to obtain superficial strain measurement. In carrying out the test a building foundation or the like may be embedded in the geological specimen in order to investigate the interaction between the soil and foundation on the application of a simulated seismic wave.

The measuring instrumentation may include accelerometers.

Further according to the present invention there is provided a method of inducing or generating a simulated seismic wave in a test specimen, for example a geological specimen, said method including providing an elastic energy accumulator comprising a member which is arranged to act on the specimen so as to deliver a seismic wave to the specimen, supporting the elastic energy accumulator to resist movement in a direction away from the specimen and preloading the elastic energy accumulator in said direction, suddenly quelling the preload force, for example by triggering an explosive bolt in the elastic energy accumulator, thereby releasing the elastic energy accumulator into impact or energy transfer with said specimen thereby transmitting a simulated seismic wave to the specimen, collecting data from the specimen and analysing said data, characterised in that the energy accumulator member is so shaped by providing it with a number of sections of different diameters that it delivers a seismic wave of known amplitude and duration.

Further advantageous apparatus and method features of the present invention will be evident from the following description and drawings.

An embodiment of seismic wave simulation apparatus for generating a seismic wave in a geological specimen will now be described, by way of example only, with reference to the accompanying simplified diagrammatic drawings in which:.

FIGURE 1 shows the seismic wave simulation apparatus adjacent a geological specimen having the foundation of a building embedded therein;

FIGURE 2 shows a simple cylindrical bar pre-loaded to yield a virtually rectangular stress wave, and

FIGURE 3 shows cylindrical bars of two different sections arranged to yield a different stress wave pattern.

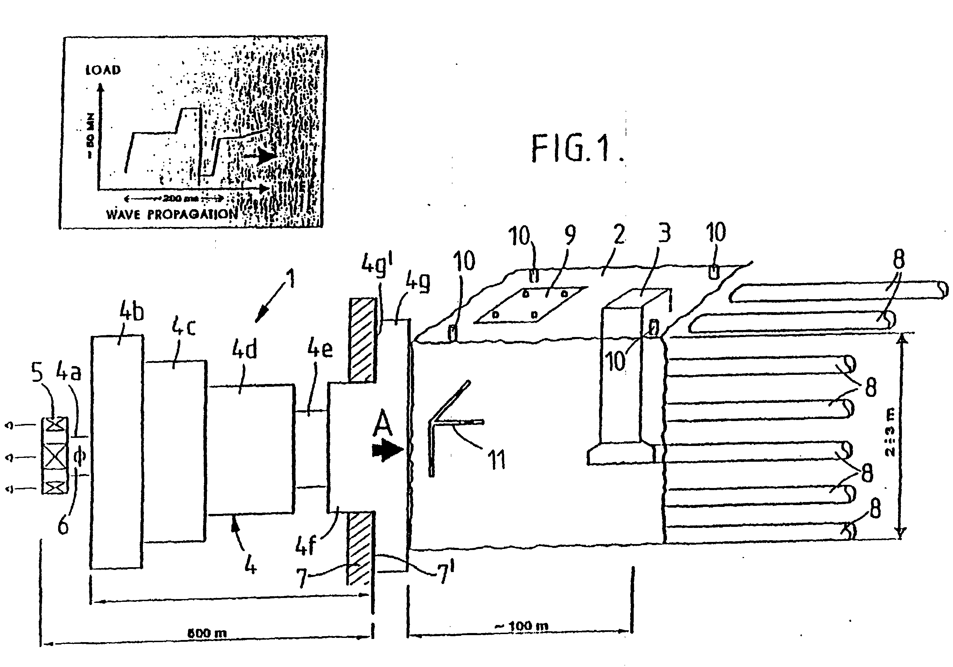

FIGURE 1 of the drawings shows schematically seismic wave simulation apparatus 1 positioned to the left of a geological specimen 2 in which is embedded the foundation 3 of a building (not shown). The seismic wave simulation apparatus has an elastic energy accumulator 4 comprising an impactor member which can be preloaded in tension in a direction away from the geological specimen 2 (i.e. in a direction reverse to arrow A) by means of a hydraulic actuator 5. The apparatus 1 includes a blocking or support system which effectively fixes the right hand end of the elastic energy accumulator 4 whilst said accumulator is preloaded in tension.

The elastic energy accumulator is specially shaped to simulate a seismic wave of known characteristics, such as the wave shown in the top left hand corner of FIGURE 1 in order that wave propagation laws and effects throughout the geological specimen 2 and foundation 3 can be properly established.

It is to be noted that the energy accumulator in the present instance includes seven sections 4a to 4g of varying diameter and the geometry of this energy accumulator may be modified in order to obtain different wave shapes of known characteristics.

FIGURE 1 shows only one such configuration where reflections can provide many wave shapes of different amplitude in tension and in compression. Section 4a of the energy accumulator 4 has the narrowest diameter and an explosive bolt 6 extends diametrically of the section.

It is to be understood that once the energy accumulator has been preloaded by the hydraulic actuator this energy can be released and transmitted as a seismic wave through the geological specimen 2 when the bolt 6 is exploded. In order to create wave propagation the energy stored in the energy accumulator 4 should be released suddenly. The explosive bolt 6 is the weak part of the energy accumulator and when this part is broken the energy is released. Usually, explosive will be inserted inside the bolt which allows said bolt to rupture in a very brief time in order to obtain a stress wave with a short rise time.

The right hand end section 4g of the energy accumulator has a rear face 4g' which engages the front face 7' of the blocking or support system 7 when the hydraulic actuator 5 places the energy accumulator 4 under preload conditions, in a manner which should be evident from the drawings.

The manner in which the geometry of the energy accumulator 4 may be modified in order to obtain particular wave shapes is explained below. The duration of the wave is a function of the length of the energy accumulator and the amplitude can be determined by modifying the acoustic impedance along the energy accumulator 4.

Estimation of the stress wave values between two long bars with different acoustic impedance.

It can be shown that the amplitude of the stress σ in the case of stress wave propagation is a linear function of the particle velocity V:

$$\sigma = \rho.C.V. \qquad (1)$$

ρ is the density of the medium (bar)
C is the wave velocity.

This equation can be used to estimate the wave transmission and reflection through the interfaces of two bars in contact with a different acoustical impedance. In this case two conditions should be satisfied:

The loads at the interface between the two bars are equal at each instant:

$$A(\sigma_i + \sigma_r) = A. \, \sigma_t \qquad (2)$$

A is the cross sectional area of the bar at the interface.

The particle velocities at the interface between the two bars are equal at each instant:

$$V_i = V_r + V_t \qquad (3)$$

By using equation (1) in equation (2) we obtain that:

$$A_1 \, (\rho_1 C_1 V_i) + A_1 (\rho_1 C_1 V_r) = A_2 \, (\rho_2 C_2 V_t) \qquad (4)$$

with equation 3 we obtain that:

$$V_r = \frac{A_{2r}\rho_2 C_2 - A_1\rho_1 C_1}{A_{2r}\rho_2 C_2 + A_1\rho_1 C_1} V_1 \qquad (5)$$

and

$$V_t = \frac{2A_1\rho_1 C_2}{A_{2r}\rho_2 C_2 + A_1\rho_1 C_1} V_i \qquad (6)$$

By writing these equations for stresses we have:

$$\sigma_2 = \frac{A_{2r}\rho_2 C_2 - A_1\rho_1 C_1}{A_{2r}\rho_2 C_2 + A_1\rho_1 C_1} \, \sigma_i \qquad (7)$$

$$\sigma_t = \frac{2A_1\rho_2 C_2}{A_{2r}\rho_2 C_2 + A_1\rho_1 C_1} \sigma_1 \qquad (8)$$

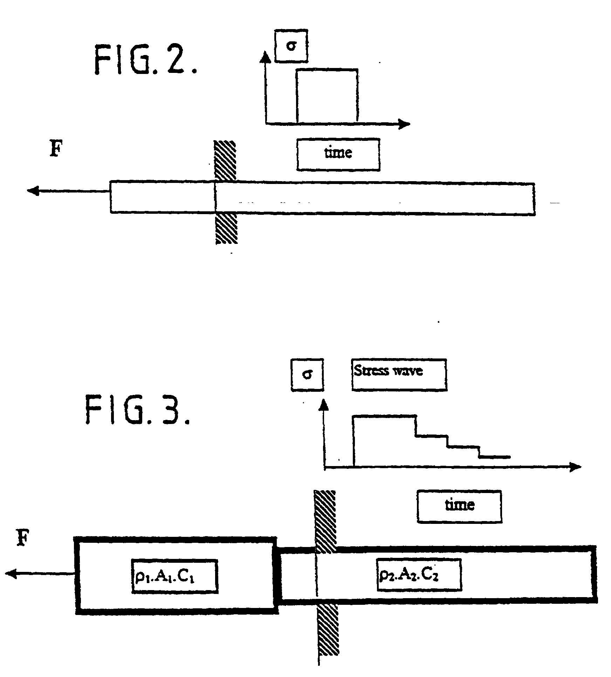

If a bar is preloaded with an acoustic impedance $\rho_1 A_1 C_1$ the stress wave generated is nearly rectangular (FIGURE 2). This application could be the starting point to understand the basic behaviour of wave propagation in the soil and will permit the validation of the calcul codes used to describe the earthquake phenomena.

Two cylindrical bars with two different sections (as shown in FIGURE 3) and a longitudinal stress wave which propagates from one end of the left bar can now be considered. If the acoustic impedance $\rho 1 C_1 A_1 > \rho_2 A_2 C_2$ then we obtain a wave which decreases in function of time.

The amplitude and the shape of the wave generated can be found knowing the impedance and also the length of the bars to obtain the transit time. Using the above formula in a numerical programme it is possible to know the shape of the wave which could be generated in function of the geometry of the energy accumulator.

The geological specimen 2 may be a soil rocks specimen and, in order to measure the mechanical behaviour across the section of the geological specimen, transducer bars 8 are provided in the specimen as shown in FIGURE 1. The transducer bars 8 are instrumented with strain gauges and measurements taken in a generally known manner. Additionally, in order to obtain measurements regarding local displacements of the soil in the geological specimen 2 an electrified metallic thin sheet 9 is fixed firmly to the surface of the soil by a cement and connected up to a measuring instrumentation such as a Wheatstone bridge, in the case of resistance strain gauges, in order to obtain superficial strain measurement.

Thus, in the present instance, a simulated seismic wave can be transmitted through the geological specimen 2 and through a building foundation 3, so interaction between the soil and the foundation can be studied and evaluated.

Any other measuring instrumentation may be provided such as the accelerometers 10 and embedded seismic sensor bar 11.

It is believed the seismic wave simulation apparatus 1 can be used to provide a deterministic approach to monitoring and predicting:

    (a) earthquakes,
    (b) large ground displacements of natural and artificial origin;
    (c) explosion effects of mining work and large civil engineering works,
    (d) volcanic activity,
    (e) the dynamic interaction between soil and structures.

This approach is based on the stress wave release and wave propagation measurements from or in fracturing rock specimens.

Furthermore, the seismic wave simulation wave apparatus allows different kinds of soils to be submitted to earthquake-like effects at large-scale, the interaction between soil and foundations to be studied. The apparatus should allow precise measures of attenuation laws for acceleration, magnitude as a function of distance etc. since initial energy into the soil is well known and the measurement is performed without modification of the wave. Propagation laws and explosive waves for the optimisation of mining and large excavation works could be tested and a large displacement could be reached (up to 5 metres) for an ELEA of 500 meters.

Advantageously, embodiments of the present invention may provide:

    (1) A precision seismic load testing device of large geological specimens of homogeneous or composite nature reproducing a significantive sample of the earth crust in which propagation parameters (load, displacement, speed, accelerations) of seismic/explosive waves can be locally and globally measured.

(2) Accumulation of a large amount of potential energy released as a real seismic/explosive wave of well known shape, amplitude and duration by proper sizing of length and cross section of the ELEA allowing very large displacements without enormous complication of inertial effects that would characterise, for example, a hydraulic machine.

(3) Bar transducers having a tuned mechanical impedance with the soil/rock specimen in order to capture without modification the seismic/explosive wave arising in the points of application.

(4) Bar transducers utilised as geotechnical transducers having the unique characteristic of the local contemporaneous direct measurement of load, displacement, speed and accelerations provoked by the seismic/explosive wave propagation because of their elasticity and length.

It is to be understood that the scope of the present invention is not to be unduly limited by a particular choice of terminology and that a specific term may be replaced by any equivalent or generic term. Further it is to be understood that individual features, method or functions relating to the seismic wave simulation wave apparatus might be individually patentably inventive. The singular may include the plural and vice versa. Additionally, any range mentioned herein for any variable or parameter shall be taken to include a disclosure of any derivable subrange within that range or any particular value of the variable or parameter range within, or at an end of, the range or subrange.

## Claims

1. Seismic wave simulation apparatus for generating a simulated seismic wave in a geological specimen, which comprises an elastic energy accumulator (4) comprising a member arranged, in use, to act on the geological test specimen and supported to resist movement in a direction away from the specimen when the elastic energy accumulator is preloaded in said direction by actuator means (5), the arrangement being such that, in use, the preload force can be quelled suddenly, for example by triggering an explosive bolt (6), so that the member is released into impact or energy transfer with the geological specimen thereby transmitting a seismic wave to the geological specimen, **characterised in that** the elastic energy accumulator member (4) has a number of sections of different diameters (4a-g).

2. Apparatus as claimed in Claim 1 in which the elastic energy accumulator member (4) has a number of co-axial cylindrical sections of different diameters (4a-g) of which the section (4g) at the end of the member remote from the actuator means (5) constitutes an impactor which, in use, is held adjacent the geological specimen under test so as to impact the specimen on release of the member.

3. Apparatus as claimed in Claim 2 having a section (4a) nearest -the actuator means which is the smallest diameter of the sections.

4. Apparatus as claimed in Claim 3 including an explosive bolt (6) disposed diametrically of said smallest diameter section (4a).

5. Apparatus as claimed in Claim 3 or Claim 4 in which said smallest diameter section (4a) adjoins a large diameter section (4b) which is connected to two further sections (4c,4d) stepped down in diameter and connected in turn to a smaller diameter section (4e) which is larger than said smallest diameter section (4a) adjacent the actuator means (5).

6. Apparatus as claimed in Claim 5 in which said smaller diameter section (4e) is connected to two larger sections (4f,4g) which are stepped up in diameter, the last of these sections (4g) constituting the impactor to be located adjacent to the geological specimen in use.

7. Apparatus as claimed in Claim 6 in which the accumulator member (4) is supported to resist movement in a direction away from the geological specimen under test, by said last-mentioned section (4g).

8. Apparatus as claimed in Claim 7 in which a blocking system or fixed support is provided at the rear of said last-mentioned section (4g) surrounding the penultimate section (4f), thereby resisting or preventing movement of the accumulator member (4) in said direction on the application of the preload force.

9. Apparatus as claimed in Claim 1 in which the elastic energy accumulator (4) includes seven cylindrical sections of different diameters (4a-g).

10. Apparatus as claimed in any one of the preceding claims in which the combined length of the elastic energy accumulator (4) and the actuator means (5) is of the order of 500 metres.

11. Apparatus as claimed in any one of the preceding claims having transducers (8) arranged to measure, in use, the mechanical behaviour across the section of the geological specimen through which a seismic wave is being transmitted.

**12.** Apparatus as claimed in Claim 11 in which the transducers (8) are in the form of bars or elongate members arranged in a direction parallel to the direction of propagation of the seismic wave.

**13.** Apparatus as claimed in any one of the preceding claims in which seismic sensors (11) are included extending at an angle or transversely of the direction of propagation of the wave.

**14.** Apparatus as claimed in any one of the preceding claims including a thin metallic or conductive sheet (9) to be fixed to the surface of the geological specimen (for example by cement) and connected to measuring instrumentation such as a Wheatstone bridge, for example, in order to obtain superficial strain measurement.

**15.** Apparatus as claimed in any one of the preceding claims in which the measuring instrumentation includes accelerometers (10).

**16.** A method of inducing or generating a simulated seismic wave in a test specimen, for example a geological specimen, said method including providing an elastic energy accumulator (4) comprising a member which is arranged to act on the specimen so as to deliver a seismic wave to the specimen, supporting the elastic energy accumulator to resist movement in a direction away from the specimen and preloading the elastic energy accumulator in said direction, suddenly quelling the preload force, for example by triggering an explosive bolt (6) in the elastic energy accumulator, thereby releasing the elastic energy accumulator into impact or energy transfer with said specimen thereby transmitting a simulated seismic wave to the specimen, collecting data from the specimen and analysing said data, **characterised in that** the energy accumulator member is soshaped by providing it with a number of sections of different diameters that it delivers a seismic wave of known amplitude and duration.

**Patentansprüche**

**1.** Simulationsvorrichtung für seismische Wellen zum Erzeugen einer simulierten seismischen Welle in einer geologischen Probe, welche Vorrichtung einen elastischen Energiespeicher (4) aufweist, der einen Körper umfaßt, der während des Gebrauchs derart angeordnet ist, daß er auf den geologischen Probekörper einwirkt, und abgestützt ist, um einer Bewegung in einer Richtung weg von der Probe zu widerstehen, wenn der elastische Energiespeicher in der Richtung durch eine Betätigungseinrichtung (5) vorgespannt wird, wobei die Anordnung derart ausgebildet ist, daß die Vorspannkraft während des Gebrauchs plötzlich beispielsweise durch Auslösen eines Sprengbolzens (6) überwunden werden kann, so daß der Körper für einen Stoß oder eine Energieübertragung auf die geologische Probe freigegeben wird, wodurch eine seismische Welle auf die geologische Probe übertragen wird, **dadurch gekennzeichnet, daß** der elastische Energiespeicherkörper (4) eine Anzahl von Abschnitten unterschiedlicher Durchmesser (4a-g) hat.

**2.** Vorrichtung nach Anspruch 1, **dadurch gekennzeichnet, daß** der elastische Energiespeicherkörper (4) eine Anzahl koaxialer zylindrischer Abschnitte unterschiedlicher Durchmesser (4a-g) hat, von denen der Abschnitt (4g) am Ende des Körpers, welcher von der Betätigungseinrichtung (5) abgelegen ist, eine Stoßvorrichtung bildet, die während des Gebrauchs an die geologische, zu untersuchende Probe angrenzend gehalten ist, um auf die Freigabe des Körpers hin auf die Probe aufzuschlagen.

**3.** Vorrichtung nach Anspruch 2, **gekennzeichnet durch** einen Abschnitt (4a), welcher der Betätigungseinrichtung am nächsten angeordnet ist und den kleinsten Durchmesser der Abschnitte hat.

**4.** Vorrichtung nach Anspruch 3, **gekennzeichnet durch** einen Sprengbolzen (6), welcher diametral in bezug auf den kleinsten Durchmesserabschnitt (4a) angeordnet ist.

**5.** Vorrichtung nach Anspruch 3 oder 4, **dadurch gekennzeichnet, daß** der kleinste Durchmesserabschnitt (4a) an einen großen Durchmesserabschnitt (4b) angrenzt, welcher mit zwei weiteren, im Durchmesser herabgesetzten Abschnitten (4c, 4d) und der Reihe nach mit einem kleineren Durchmesserabschnitt (4e) verbunden ist, welcher größer als der kleinste, an die Betätigungseinrichtung (5) angrenzende Durchmesserabschnitt (4a) ist.

**6.** Vorrichtung nach Anspruch 5, **dadurch gekennzeichnet, daß** der kleinere Durchmesserabschnitt (4e) mit zwei größeren Abschnitten (4f, 4g) verbunden ist, die im Durchmesser heraufgesetzt sind, wobei der letzte dieser Abschnitte (4g) die Stoßvorrichtung bildet, welche im Gebrauch angrenzend an die geologische Probe angeordnet ist.

**7.** Vorrichtung nach Anspruch 6, **dadurch gekennzeichnet, daß** der Speicherkörper (4) durch den letztgenannten Abschnitt (4g) abgestützt ist, um einer Bewegung in einer Richtung weg von der geologischen, zu untersuchenden Probe zu widerstehen.

8. Vorrichtung nach Anspruch 7, **dadurch gekennzeichnet, daß** ein Blockiersystem oder eine feststehende Abstützung an der Rückseite des letztgenannten Abschnittes (4g) vorgesehen ist, welche den vorletzten Abschnitt (4f) umgibt und dadurch einer Bewegung des Speicherkörpers (4) in der genannten Richtung bei Aufbringung der Vorspannkraft widersteht oder diese verhindert.

9. Vorrichtung nach Anspruch 1, **dadurch gekennzeichnet, daß** der elastische Energiespeicher (4) sieben zylindrische Abschnitte unterschiedlicher Durchmesser (4a-g) aufweist.

10. Vorrichtung nach einem der vorhergehenden Ansprüche, **dadurch gekennzeichnet, daß** die kombinierte Länge von elastischem Energiespeicher (4) und Betätigungseinrichtung (5) in der Größenordnung von 500 m liegt.

11. Vorrichtung nach einem der vorhergehenden Ansprüche, **gekennzeichnet durch** Meßumformer (8), welche während des Gebrauchs zum Messen des mechanischen Verhaltens quer zum Abschnitt der geologischen Probe angeordnet sind, **durch** die eine seismische Welle übertragen wird.

12. Vorrichtung nach Anspruch 11, **dadurch gekennzeichnet, daß** die Meßumformer (8) in Form von Stäben oder länglichen Teilen ausgebildet sind, die in einer Richtung parallel zur Richtung der Ausbreitung der seismischen Welle angeordnet sind.

13. Vorrichtung nach einem der vorhergehenden Ansprüche, **dadurch gekennzeichnet, daß** seismische Meßfühler (11) vorgesehen sind, die sich unter einem Winkel oder quer zur Richtung der Ausbreitung der Welle erstrecken.

14. Vorrichtung nach einem der vorhergehenden Ansprüche, **gekennzeichnet durch** eine dünne metallische oder leitfähige Platte (9), welche an der Oberfläche der geologischen Probe (z.B. **durch** Zement) fixierbar und mit einem Meßinstrumentarium, wie z.B. einer Wheatstone-Brücke, verbindbar ist, um eine an der Oberfläche liegende Dehnungsmessung zu erhalten.

15. Vorrichtung nach einem der vorhergehenden Ansprüche, **dadurch gekennzeichnet, daß** das Meßinstrumentarium Beschleunigungsmesser (10) aufweist.

16. Verfahren zum Hervorrufen oder Erzeugen einer simulierten seismischen Welle in einer Testprobe, z. B. einer geologischen Probe, wobei das Verfahren umfaßt: Vorsehen eines elastischen Energiespeichers (4) mit einem Körper, der derart angeordnet ist, daß er auf die Probe einwirkt, um auf die Probe eine seismische Welle abzugeben, Abstützen des elastischen Energiespeichers, damit dieser einer Bewegung in einer Richtung weg von der Probe widersteht und Vorspannen des elastischen Energiespeichers in der Richtung, plötzliches Überwinden der Vorspannkraft beispielsweise durch Auslösen eines Sprengbolzens (6) in dem elastischen Energiespeicher, dadurch Freigegen des elastischen Energiespeichers zu einem Zusammentreffen oder einer Energieübertragung mit der bzw. auf die Probe, um dadurch eine simulierte seismische Welle auf die Probe zu übertragen, Sammeln der Daten von der Probe und Analysieren der Daten, **dadurch gekennzeichnet, daß** der Energiespeicherkörper derart gestaltet ist, daß er mit einer Anzahl von Abschnitten unterschiedlichen Durchmessers versehen ist, so daß er eine seismische Welle bekannter Amplitude und Dauer abgibt.

## Revendications

1. Dispositif de simulation d'onde sismique destiné à générer une onde sismique simulée dans un échantillon géologique, lequel comprend un accumulateur d'énergie élastique (4) comprenant un élément agencé, en utilisation, pour agir sur l'échantillon de test géologique et supporté pour résister au déplacement dans une direction à l'écart de l'échantillon lorsque l'accumulateur d'énergie élastique est préchargé dans ladite direction par un moyen d'actionneur (5), l'agencement étant tel qu'en utilisation la force de précharge peut être réprimée subitement par exemple en déclenchant un boulon explosif (6), de sorte que l'élément est libéré en choc ou transfert d'énergie avec l'échantillon géologique en transmettant ainsi une onde sismique à l'échantillon géologique, **caractérisé en ce que** l'élément d'accumulateur d'énergie élastique (4) comporte un certain nombre de sections de diamètres différents (4a à g).

2. Dispositif selon la revendication 1, dans lequel l'élément d'accumulateur d'énergie élastique (4) comporte un certain nombre de sections cylindriques coaxiales de diamètres différents (4a à g) dont la section (4g) à l'extrémité de l'élément éloigné du moyen d'actionneur (5) constitue un dispositif de choc qui, en utilisation, est maintenu de façon adjacente à l'échantillon géologique sous test de façon à heurter l'échantillon lors de la libération de l'élément.

3. Dispositif selon la revendication 2, comportant une section (4a) la plus proche du moyen d'actionneur qui présente le diamètre le plus petit des sections.

4. Dispositif selon la revendication 3, comprenant un boulon explosif (6) disposé suivant le diamètre de ladite section de diamètre le plus petit (4a).

5. Dispositif selon la revendication 3 ou la revendication 4 dans lequel ladite section de diamètre le plus petit (4a) est contiguë à une section de grand diamètre (4b) qui est reliée à deux autres sections (4c, 4d) de diamètres qui se réduisent et reliées à leur tour à une section de diamètre plus petit (4e) qui est plus grande que ladite section de diamètre le plus petit (4a) adjacente au moyen d'actionneur (5).

6. Dispositif selon la revendication 5, dans lequel ladite section de diamètre plus petit (4e) est reliée à deux sections plus grandes (4f, 4g) qui présentent des diamètres qui augmentent, la dernière de ces sections (4g) constituant le dispositif de choc devant être situé de façon adjacente à l'échantillon géologique en utilisation.

7. Dispositif selon la revendication 6, dans lequel l'élément d'accumulateur (4) est supporté pour résister au déplacement dans une direction à l'écart de l'échantillon géologique sous test, par ladite section mentionnée en dernier (4g).

8. Dispositif selon la revendication 7, dans lequel un système de blocage ou support fixe est prévu à l'arrière de ladite section mentionnée en dernier (4g) entourant l'avant dernière section (4f), en résistant ainsi à un déplacement de l'élément d'accumulateur (4) dans ladite direction lors de l'application de la force de précharge ou bien en empêchant celui-ci.

9. Dispositif selon la revendication 1, dans lequel l'accumulateur d'énergie élastique (4) comprend sept sections cylindriques de diamètres différents (4a à g).

10. Dispositif selon l'une quelconque des revendications précédentes, dans lequel la longueur combinée de l'accumulateur d'énergie élastique (4) et du moyen d'actionneur (5) est de l'ordre de 500 mètres.

11. Dispositif selon l'une quelconque des revendications précédentes, comportant les transducteurs (8) agencés pour mesurer, en utilisation, le comportement mécanique en travers de la section de l'échantillon géologique à travers lequel une onde sismique est transmise.

12. Dispositif selon la revendication 11, dans lequel les transducteurs (8) sont sous la forme de barres ou d'éléments allongés agencés dans une direction parallèle à la direction de propagation de l'onde sismique.

13. Dispositif selon l'une quelconque des revendications précédentes, dans lequel des capteurs sismiques (11) sont compris, s'étendant suivant un angle ou de façon transversale à la direction de propagation de l'onde.

14. Dispositif selon l'une quelconque des revendications précédentes, comprenant une feuille conductrice ou métallique mince (9) devant être fixée à la surface de l'échantillon géologique (par exemple par un ciment) et reliée à des instruments de mesure tels qu'un pont de Wheatstone par exemple de manière à obtenir une mesure de contrainte superficielle.

15. Dispositif selon l'une quelconque des revendications précédentes, dans lequel les instruments de mesure comprennent des accéléromètres (10).

16. Procédé consistant à induire ou générer une onde sismique simulée dans un échantillon de test, par exemple un échantillon géologique, ledit procédé comprenant la fourniture d'un accumulateur d'énergie élastique (4) comprenant un élément qui est agencé pour agir sur l'échantillon de façon à délivrer une onde sismique à l'échantillon, le support de l'accumulateur d'énergie élastique pour résister au déplacement dans une direction à l'écart de l'échantillon et la précharge de l'accumulateur d'énergie élastique dans ladite direction, la répression de façon subite de la force de précharge, par exemple en déclenchant un boulon explosif (6) dans l'accumulateur d'énergie élastique, en libérant ainsi l'accumulateur d'énergie élastique sous forme de choc ou de transfert d'énergie avec ledit échantillon en transmettant ainsi une onde sismique simulée à l'échantillon, le recueil des données provenant de l'échantillon et l'analyse desdites données, **caractérisé en ce que** l'élément d'accumulateur d'énergie est mis en forme en le munissant d'un certain nombre de sections de diamètres différents de sorte qu'il délivre une onde sismique d'amplitude et de durée connues.

FIG.1.

# FIG. 2.

$\sigma$

time

F

# FIG. 3.

$\sigma$ | Stress wave

time

F

$\rho_1.A_1.C_1$   $\rho_2.A_2.C_2$